# EUROPÄISCHE PATENTSCHRIFT

(11) **EP 3 784 930 B1**
(45) Veröffentlichungstag und Bekanntmachung des Hinweises auf die Patenterteilung: **14.09.2022**
(21) Anmeldenummer: 19714557.6
(22) Anmeldetag: 19.03.2019
(51) Int. Cl.: F16H 63/48

(54) **VERFAHREN ZUR AKTIVIERUNG EINES PARKSPERRENSYSTEMS UND PARKSPERRENSYSTEM**
METHOD FOR ACTIVATING A PARKING LOCK SYSTEM AND PARKING LOCK SYSTEM
PROCÉDÉ D'ACTIVATION D'UN SYSTÈME DE BLOCAGE DE STATIONNEMENT ET SYSTÈME DE BLOCAGE DE STATIONNEMENT

(30) Priorität: 25.04.2018 DE 102018206369
(43) Veröffentlichungstag der Anmeldung: 03.03.2021
(73) Patentinhaber: Robert Bosch GmbH, 70442 Stuttgart (DE)
(72) Erfinder: DREWE, Ingo, 23769 Fehmarn (DE); BAST, Frank, 71732 Tamm (DE)
(86) Internationale Anmeldenummer: PCT/EP2019/056827
(87) Internationale Veröffentlichungsnummer: WO 2019/206521

(56) Entgegenhaltungen:
- DE-A1- 19 943 519
- DE-A1-102015 111 367
- US-A- 5 743 348

## Beschreibung

### Technisches Gebiet

Die Erfindung bezieht sich auf ein Verfahren zur Aktivierung eines Parksperrensystems im Triebstrang eines Fahrzeugs mit mindestens einer E-Maschine mit Getriebe, die mit von dieser angetriebenen Rädern verbunden ist sowie auf ein Parksperrensystem eines Fahrzeugs. Ein solches Verfahren und ein solches Parksperrensystems sind aus der DE 10 2015 111367 A1 bekannt. Darin wird beschrieben, daß zur Aktivierung des Parksperrensystems ein Vergleich der Drehzahl der mindestens einen E-Maschine mit Getriebe mit einer vorgegebenen, einen Schwellwert darstellenden Grenzdrehzahl durchgeführt wird

### Stand der Technik

Triebstränge von Kraftfahrzeugen, die mindestens eine elektrische Maschine aufweisen, sind teilweise elektrifiziert. Die mindestens eine E-Maschine ist mit den Antriebsrädern des Fahrzeugs gekoppelt, wobei das Getriebe mittels einer schaltbaren formschlüssigen Sperre blockiert werden kann, um das Fahrzeug am unbeabsichtigten Wegrollen zu hindern. Die Parksperrenfunktion umfasst die Betätigung einer Sperre in der Regel auf automatischem Wege (by wire), so dass durch elektronische Stellbefehle eine Aktuatorik, zum Beispiel eine Getriebewelle blockiert oder freigegeben wird. Die Parksperre kann bei einem sich mit einer Restgeschwindigkeit bewegenden Fahrzeug eingelegt werden, so dass beim Einrasten der formschlüssigen Sperre die Rotationsbewegungen, die im Triebstrang vorliegen, abrupt abgestoppt werden. Dabei wirken die Trägheitsmomente des Fahrzeuges und der mindestens einen elektrischen Maschine auf das Getriebe ein, wodurch kritische Momentenüberhöhungen auftreten können, die ein Vielfaches des Antriebsmomentes ausmachen können. Je nach angenommener Häufigkeit des vorliegend beschriebenen Lastfalles muss dieser bei der Auslegung des Getriebes berücksichtigt werden, was die Herstellkosten eines derartigen Getriebes entsprechend verteuert.

Weiterhin sind die bisher eingesetzten Parksperrensysteme mit einem mechanischen Abweisemechanismus ausgestattet, der ein Einrasten der Sperre bei höheren Fahrzeuggeschwindigkeiten aus Sicherheitsgründen verhindert. Dieser mechanische Abweisemechanismus unterliegt einem Verschleiß, wenn er wirksam wird. Die Fahrzeuggeschwindigkeit liegt beim Betätigen dieses Abweisemechanismus oberhalb eines Schwellwertes, in der Regel 2 km/h bis 5 km/h.

### Darstellung der Erfindung

Erfindungsgemäß wird ein Verfahren zur Aktivierung eines Parksperrensystems im Triebstrang eines Fahrzeugs mit mindestens einer E-Maschine mit Getriebe vorgeschlagen, wobei die angetriebenen Räder mit der E-Maschine mit Getriebe verbunden sind und nachfolgende Verfahrensschritte durchlaufen werden:
a) Vergleich einer Drehzahl n_{E} der mindestens einen E-Maschine mit Getriebe mit einer vorgegebenen, einen Schwellwert darstellenden Grenzdrehzahl n_{G},
b) für den Fall, dass die Drehzahl n_{E} die Grenzdrehzahl n_{G} unterschreitet, erfolgt eine Auslösung eines Stellbefehles zur Betätigung einer Aktuatorik zur Aktivierung des Parksperrensystems,
c) für den Fall, dass die Drehzahl n_{E} die Grenzdrehzahl n_{G} überschreitet, wird eine Auslösung eines Steuerbefehls zur Betätigung einer Aktuatorik für das Parksperrensystem verhindert und
d) Durchlaufen einer zweiten Vergleichsstufe solange n_{E} > n_{G} und bei Erreichen von n_{E} ≤ n_{G} Verzweigung zum Verfahrensschritt b).

Durch die erfindungsgemäß vorgeschlagene Lösung lassen sich die kritischen Lastfälle für das Getriebesystem durch entsprechende Ansteuerung des Parksperrensystems stark reduzieren. Durch diesen Umstand ist der Lastfall im Design nicht mehr gesondert zu berücksichtigen und die Getriebeauslegung kann kostengünstiger gestaltet werden.

In Weiterbildung des erfindungsgemäß vorgeschlagenen Verfahrens steht die Drehzahl n_{E} der mindestens einen E-Maschine mit Getriebe in festem Zusammenhang mit einer Geschwindigkeit v_{F} des Fahrzeugs. Dieser Umstand wird dahingehend ausgenutzt, dass die Drehzahl n_{E} der mindestens einen elektrischen Maschine bei sich sehr langsam bewegenden Fahrzeugs sehr viel genauer bestimmt werden kann, als dies durch eine Bewertung in konventionellen Triebsträngen, die eine Verbrennungskraftmaschine und Schaltgetriebe aufweisen. Bei diesen erfolgt die Berechnung anhand der Raddrehzahlen, wobei hier sowohl die zu beobachtenden Drehzahlen durch das zwischengeschaltete Getriebe üblicherweise um eine Größenordnung höher liegen.

Bei der erfindungsgemäß vorgeschlagenen Lösung erfolgt die Ermittlung der Drehzahl n_{E} der mindestens einen E-Maschine mit Getriebe in einer Auswerteeinheit anhand der Fahrzeuggeschwindigkeit.

Liegt eine die Grenzdrehzahl n_{G} übersteigende Drehzahl n_{E} der mindestens einen E-Maschine vor, so kann die Auslösung eines Stellbefehls zur Betätigung der Aktuatorik zur Aktivierung des Parksperrensystems um eine Zeitspanne Δt zeitlich verzögert werden.

In Weiterbildung des erfindungsgemäß vorgeschlagenen Verfahrens ist die Dauer der Zeitspanne Δt abhängig von der Höhe der Überschreitung der Grenzdrehzahl n_{G} durch die ermittelte Drehzahl n_{E} der mindestens einen E-Maschine mit Getriebe im Triebstrang.

Bei dem erfindungsgemäß vorgeschlagenen Verfahren kann in vorteilhafter Weise die Auslösung eines Steuerbefehles durch eine Auswerteeinheit zur Betätigung der Aktuatorik zur Aktivierung des Parksperrensystems derart erfolgen, dass entweder eine Vorderachse, eine Hinterachse oder beide Achsen oder ein Triebstrang blockiert wird.

Darüber hinaus bezieht sich die Erfindung auch auf ein Parksperrensystem für ein Fahrzeug mit mindestens einer E-Maschine mit Getriebe, die mit den Rädern des Fahrzeugs verbunden ist, wobei das Parksperrensystem gemäß ein oder mehrerer Ansprüche des vorstehenden Verfahrens betrieben wird.

Das Parksperrensystem umfasst eine schaltbare formschlüssig wirkende Sperre.

Bei der Konfiguration von Fahrzeugen mit Parksperrensystemen können die Parksperrensysteme beispielsweise an der mindestens einen E-Maschine mit Getriebe unmittelbar aufgenommen sein, oder der Vorderachse oder der Hinterachse oder dem Triebstrang als Ganzes zugeordnet sein. Das Parksperrensystem umfasst einen mechanischen Abweisemechanismus, der ein Einrasten der schaltbaren formschlüssig wirkenden Sperre bei höheren Fahrzeuggeschwindigkeiten v_{F} wird wirksam verhindert.

### Vorteile der Erfindung

Durch die erfindungsgemäß vorgeschlagene Lösung kann hinsichtlich der Getriebeauslegung erreicht werden, dass sichergestellt ist, dass das Parksperrensystem nur bei Fahrzeuggeschwindigkeiten nahe Stillstand eingelegt wird. Der Lastfall, wonach das Parksperrensystem bei Geschwindigkeiten oberhalb von 2 km/h eingelegt wird, ist ausgeschlossen, so dass bei der Auslegung des Getriebes ein derartiger Lastfall nicht mehr zu berücksichtigen ist. Ob sich das Fahrzeug nahe Stillstand befindet, kann durch Interpretation der Drehzahl der mindestens einen E-Maschine mit Getriebe sehr viel genauer bestimmt werden, verglichen mit einer Bewertung in konventionellen Triebsträngen auf Basis der Raddrehzahlen. Bei konventionellen Triebsträngen, die ein Schaltgetriebe und eine Verbrennungskraftmaschine umfassen, sind die Raddrehzahlen, durch das zwischengeschaltete Getriebe üblicherweise um eine Größenordnung höher.

In konventionellen Triebsträngen erfolgt die Plausibilisierung der Fahrzeuggeschwindigkeit zum Einlegen der Parksperre mit den Raddrehzahlen. Diese weisen üblicherweise bei sehr kleinen Fahrzeuggeschwindigkeiten stark streuende oder gar keine Werte mehr auf. Um an der Nutzerschnittstelle eine reproduzierbare Einlegeschwelle zu realisieren, muss deshalb bei konventionellen Triebsträngen, d.h. mit Schaltgetriebe und mit Verbrennungskraftmaschine ein deutlich höherer Schwellwert gewählt werden, was durch die erfindungsgemäß vorgeschlagene Lösung unter Zugrundelegung der Drehzahl der mindestens einen E-Maschine mit Getriebe vermieden werden kann.

Hinsichtlich sich ergebener Vorteile für das Parksperrensystem sei darauf verwiesen, dass durch das erfindungsgemäß vorgeschlagene Verfahren der Abweisemechanismus nur noch im Notfall, beispielsweise bei einer Fehlauslösung beansprucht wird. Daher können die Anforderungen an die Parksperrenmechanik entsprechend reduziert werden, da die oben stehend beschriebenen mechanischen Belastungen bei höheren Fahrzeuggeschwindigkeiten durch das erfindungsgemäß vorgeschlagene Verfahren eliminiert sind.

### Kurze Beschreibung der Zeichnung

Anhand der Zeichnung wird die Erfindung nachstehend eingehender beschrieben.

Es zeigt:
- Figur 1: ein Fahrzeug mit einem teilweise elektrifizierten Triebstrang und
- Figur 2: einen Signalflussplan, der das erfindungsgemäß vorgeschlagene Verfahren im Wesentlichen abbildet.

### Ausführungsvarianten

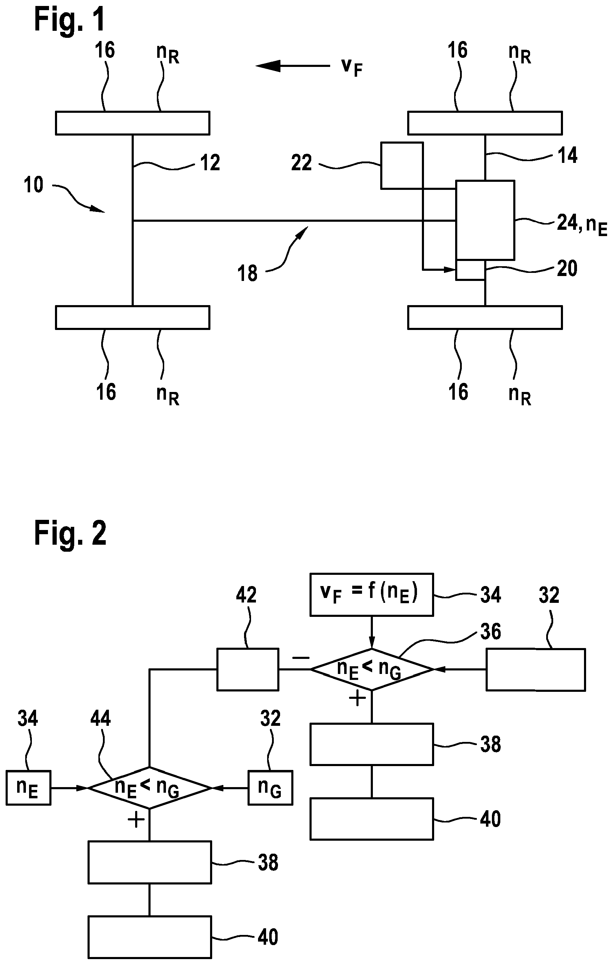

Der Darstellung gemäß Figur 1 ist in schematischer Weise ein Fahrzeug 10 mit einem teilweise elektrifizierten Triebstrang 18 zu entnehmen.

Das Fahrzeug 10 umfasst eine Vorderachse 12 und eine Hinterachse 14. Die Vorderachse 12 weist jeweils zwei Räder 16 auf, die Hinterachse 14 weist zwei Räder 16 auf, die mit einer die Hinterachse 14 integrierten E-Maschine 24 mit Getriebe verbunden sind. Die mindestens eine E-Maschine 24 mit Getriebe ist mit einer Auswerteeinheit 22 verbunden; ferner ist der mindestens einen E-Maschine 24 mit Getriebe ein Parksperrensystem 20 zugeordnet. Wichtig ist, dass zum Zeitpunkt des Einlegens des Parksperrensystems 20 die E-Maschine 24 nicht vom Getriebe getrennt ist, ansonsten würde die Drehzahl n_{E} der elektrischen Maschine 24 mit Getriebe keinen Aufschluss über die tatsächlich vorliegende Fahrzeuggeschwindigkeit v_{F} geben.

Das Fahrzeug 10 bewegt sich mit einer Fahrzeuggeschwindigkeit v_{F}, eine Drehzahl der mindestens einen E-Maschine 24 mit Getriebe ist durch n_{E} bezeichnet, eine Raddrehzahl der Räder 16 ist durch n_{R} bezeichnet.

Wenngleich in Figur 1 nicht explizit dargestellt, kann die mindestens eine E-Maschine 24 mit Getriebe sowie das Parksperrensystem 20 auch auf der Vorderachse 12 vorgesehen sein. Bei Fahrzeugen 10 mit einem teilweise elektrifizierten Triebstrang 18 können sowohl auf der Vorderachse 12 als auch auf der Hinterachse 14 jeweils eine E-Maschine 24 mit Getriebe vorgesehen sein.

Figur 2 zeigt einen Signalflussplan, mit dem die wesentlichen Komponenten des erfindungsgemäß vorgeschlagenen Verfahrens abgebildet werden sollen.

Um die oben stehend beschriebene kritische Momentenüberhöhung zu reduzieren, soll das Parksperrensystem 20 nur bei Fahrzeuggeschwindigkeiten v_{F} ≤ 2 km/h eingelegt werden. Zunächst erfolgt eine Ermittlung 34 der Drehzahl n_{E} der mindestens einen E-Maschine 24 mit Getriebe. Die Drehzahl n_{E} der mindestens einen E-Maschine 24 mit Getriebe steht bei den hier beschriebenen Getrieben im festen Zusammenhang mit der Fahrzeuggeschwindigkeit v_{F} des Fahrzeugs 10, wie in Figur 1 angedeutet. In einer ersten Vergleichsstufe 36 erfolgt der Vergleich der ermittelten Drehzahl n_{E} der mindestens einen E-Maschine 24 mit Getriebe mit einem Schwellwert, einer Grenzdrehzahl n_{G}. Die erste Vergleichsstufe 36 befindet sich in der Auswerteeinheit 22, welche mit der mindestens einen E-Maschine 24 mit Getriebe verbunden ist. Liegt die ermittelte Drehzahl n_{E} der mindestens einen elektrischen Maschine oberhalb einer Schwellwertvorgabe 32 für die Grenzdrehzahl n_{G}, dann wird die Aktivierung des Parksperrensystemes 20 verhindert oder um eine Zeitspanne Δt verzögert.

In diesem Falle erfolgt entweder eine Verhinderung 42 der Auslösung eines Stellbefehles für die Aktuatorik zur Aktivierung des Parksperrensystems 20 oder eine Verzögerung.

Andernfalls, d.h. bei Unterschreitung der als Schwellwert gesetzten vordefinierten Grenzdrehzahl n_{G} durch die ermittelte Drehzahl n_{E} der mindestens ein elektrischen Maschine 24 mit Getriebe wird der Einlegewunsch vom "by wire"-System in einem Stellbefehl zur Aktivierung des Parksperrensystemes 20 umgesetzt. Die Prüfung des Schwellwertes erfolgt idealerweise in der Auswerteeinheit 22, welche das Parksperrensystem 20 koordiniert, könnte aber auch auf einer anderen Steuerung, wie zum Beispiel in einer separaten Parksperrensteuerung implementiert werden.

Ein aktiviertes Parksperrensystem 20 ist durch Bezugszeichen 40 angedeutet. Für diesen Fall ist sichergestellt, dass die Aktivierung des Parksperrensystems 20 auf schonende Weise für die mechanischen Komponenten des Parksperrensystems 20 unterhalb einer Fahrzeuggeschwindigkeit v_{F} ≤ 2 km/h erfolgt.

Für den Fall, dass sich in der ersten Vergleichsstufe 36 herausstellt, dass die Drehzahl n_{E} der mindestens einen elektrischen Maschine oberhalb der als Schwellwert dienenden Grenzdrehzahl n_{G} liegt, erfolgt die Verhinderung 42 der Auslösung für die Steuerbefehle für die Aktuatorik des Parksperrensystems 20. Dies bleibt deaktiviert. Das Durchlaufen der zweiten Vergleichsstufe 44 erfolgt solange bis n_{E} ≤ n_{G}; danach kann ein Steuerbefehl zur Betätigung der Aktuatorik des Parksperrensystems 20 erfolgen, so dass dieses aktiviert wird.

Nach Ablauf einer Zeitspanne Δt kann auch alternativ innerhalb einer zweiten Vergleichsstufe 44 erneut ein Vergleich zwischen der ermittelten Drehzahl n_{E} der mindestens einen E-Maschine 24 mit Getriebe und der als Schwellwert dienenden Grenzdrehzahl n_{G} durchlaufen werden. Die Zeitspanne Δt kann in Abhängigkeit vom Grad der Überschreitung der Drehzahl n_{E} in Bezug auf die Grenzdrehzahl n_{G} gewählt werden. Die Zeitspanne Δt kann kurz bemessen werden, wenn die Überschreitung betragsmäßig gering ist, die Zeitspanne Δt kann hingegen länger gewährt werden, wenn der Betrag der Überschreitung der Grenzdrehzahl n_{G} durch die ermittelte Drehzahl n_{E} der mindestens einen E-Maschine 24 mit Getriebe größer ist.

Danach schließt sich auch dieser Variante die Auslösung 38 eines Stellbefehls für die Aktuatorik zur Betätigung des Parksperrensystems 20 an. Dieses ist bei Position 40 aktiviert, wobei dem Einlegkriterium des Parksperrensystems Rechnung getragen wird, wonach die Fahrzeuggeschwindigkeit v_{F} unterhalb von 2 km/h liegt.

Durch das erfindungsgemäß vorgeschlagene Verfahren werden sowohl auf die mechanischen Komponenten des Getriebes als auch auf das mechanische Abweisesystem zur Verhinderung des Einlegens des Parksperrensystems 20 die mechanischen Komponenten schädigende Lastfälle von vornherein ausgeschlossen. Das Parksperrensystem 20, welches der Hinterachse 14, dem teilweise elektrifizierten Triebstrang 18 sowie der Vorderachse 12 zugeordnet sein kann, wird ohne Berücksichtigung dieser Lastfälle ausgelegt. Auch der Abweisemechanismus kann einfacher ausgelegt werden. Demzufolge können auch die Anforderungen an die Parksperrenmechanik entsprechend reduziert werden, so dass sich eine günstigere und preiswertere Ausgestaltung der besagten Komponente, d.h. des Parksperrensystems 20 und des der E-Maschine 24 zugeordneten Getriebes ergibt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Aktivierung eines Parksperrensystems (20) im Triebstrang (18) eines Fahrzeugs (10) mit mindestens einer E-Maschine (24) mit Getriebe, die mit angetriebenen Rädern (16) verbunden ist, mit nachfolgenden Verfahrensschritten:
a) Vergleich der Drehzahl n_{E} der mindestens einen E-Maschine (24) mit Getriebe mit einer vorgegebenen, einen Schwellwert darstellenden Grenzdrehzahl n_{G},
b) für den Fall, dass die Drehzahl n_{E} die Grenzdrehzahl n_{G} unterschreitet, erfolgt eine Auslösung eines Stellbefehles zur Betätigung einer Aktuatorik zur Aktivierung des Parksperrensystems (20),
c) für den Fall, dass die Drehzahl n_{E} die Grenzdrehzahl n_{G} überschreitet, wird eine Auslösung eines Stellbefehls zur Betätigung einer Aktuatorik zur Aktivierung des Parksperrensystems (20) um eine Zeitspanne Δt verzögert, indem nach Ablauf der Zeitspanne Δt
d) eine zweite Vergleichsstufe (44) solange n_{E} > n_{G} durchlaufen wird und bei Erreichen von n_{E} ≤ n_{G} Verzweigen zu Verfahrensschritt b).

2. Verfahren gemäß Anspruch 1, **dadurch gekennzeichnet, dass** die Drehzahl n_{E} der mindestens einen E-Maschine (24) mit Getriebe in festem Zusammenhang mit der Geschwindigkeit v_{F} des Fahrzeugs (10) steht.

3. Verfahren gemäß Anspruch 1, **dadurch gekennzeichnet, dass** die Ermittlung der Drehzahl n_{E} der mindestens einen E-Maschine (24) mit Getriebe in einer Auswerteeinheit (22) anhand der Fahrzeuggeschwindigkeit v_{F} oder der Drehzahl des Getriebes erfolgt.

4. Verfahren gemäß gemäß einem der vorhergehenden Ansprüche, **dadurch gekennzeichnet, dass** die Dauer der Zeitspanne Δt abhängig von der Höhe der Überschreitung der Grenzdrehzahl n_{G} durch die ermittelte Drehzahl n_{E} der mindestens einen E-Maschine (24) mit Getriebe ist.

5. Verfahren gemäß Anspruch 1, **dadurch gekennzeichnet, dass** die Auslösung eines Steuerbefehls zur Betätigung der Aktuatorik zur Aktivierung des Parksperrensystems (20) derart erfolgt, dass eine Vorderachse (12), eine Hinterachse (14) oder ein Triebstrang (18) blockiert wird.

6. Parksperrensystem (20) für ein Fahrzeug (10) mit mindestens einer E-Maschine (24) mit Getriebe, die mit den Rädern (16) des Fahrzeugs (10) verbunden ist, wobei das Parksperrensystem (20) gemäß des Verfahrens nach einem oder mehrerer der vorhergehenden Ansprüche betrieben wird, **dadurch gekennzeichnet, dass** das Parksperrensystem (20) eine schaltbare formschlüssig wirkende Sperre umfasst.

7. Parksperrensystem (20) gemäß Anspruch 6, **dadurch gekennzeichnet, dass** dies der Vorderachse (12), der Hinterachse (14) oder dem Triebstrang (18) des Fahrzeugs (10) zugeordnet ist.

8. Parksperrensystem (20) gemäß Anspruch 6, **dadurch gekennzeichnet, dass** dieses einen mechanischen Abweisemechanismus umfasst, der ein Einrasten der schaltbaren formschlüssig wirkenden Sperre bei höherer Fahrgeschwindigkeit v_{F} verhindert.

## Claims

1. Method for activating a parking lock system (20) in the drive train (18) of a vehicle (10) with at least one electric machine (24) which has a transmission and is connected to driven wheels (16), with the following method steps:
a) comparison of the rotational speed n_{E} of the at least one electric machine (24) with a transmission with a predefined limit rotational speed n_{G} which represents a threshold value,
b) for the case where the rotational speed n_{E} undershoots the limit rotational speed n_{G}, triggering of an actuating command for actuating an actuator system for activating the parking lock system (20) takes place,
c) for the case where the rotational speed n_{E} exceeds the limit rotational speed n_{G}, triggering of an actuating command for actuating an actuator system for activating the parking lock system (20) is delayed by a time period Δt, by, after expiry of the time period Δt,
d) a second comparison stage (44) being cycled through as long as n_{E} > n_{G} and, when n_{E} ≤ n_{G} is reached, branching to method step b).

2. Method according to Claim 1, **characterized in that** the rotational speed n_{E} of the at least one electric machine (24) with a transmission is in a fixed relationship with the speed v_{F} of the vehicle (10).

3. Method according to Claim 1, **characterized in that** the determination of the rotational speed n_{E} of the at least one electric machine (24) with a transmission takes place in an evaluation unit (22) on the basis of the vehicle speed v_{F} or the rotational speed of the transmission.

4. Method according to one of the preceding claims, **characterized in that** the duration of the time period Δt is dependent on the magnitude of the exceeding of the limit rotational speed n_{G} by the determined rotational speed n_{E} of the at least one electric machine (24) with a transmission.

5. Method according to Claim 1, **characterized in that** the triggering of a control command for actuating the actuator system for activating the parking lock system (20) takes place in such a way that a front axle (12), a rear axle (14) or a drive train (18) is blocked.

6. Parking lock system (20) for a vehicle (10) with at least one electric machine (24) which has a transmission and is connected to the wheels (16) of the vehicle (10), the parking lock system (20) being operated in accordance with the method according to or more of the preceding claims, **characterized in that** the parking lock system (20) comprises a switchable lock which acts in a positively locking manner.

7. Parking lock system (20) according to Claim 6, **characterized in that** this is assigned to the front axle (12), the rear axle (14) or the drive train (18) of the vehicle (10).

8. Parking lock system (20) according to Claim 6, **characterized in that** it comprises a mechanical rejecting mechanism which, at a relatively high travelling speed v_{F}, prevents latching of the switchable lock which acts in a positively locking manner.

## Revendications

1. Procédé pour activer un système de blocage de stationnement (20) dans la chaîne cinématique (18) d'un véhicule (10) comprenant au moins une machine électrique (24) ayant une boîte de vitesses, qui est reliée aux roues menées (16), comprenant les étapes de procédé suivantes :
a) comparaison de la vitesse de rotation n_{E} de l'au moins une machine électrique (24) ayant une boîte de vitesses avec une vitesse de rotation limite n_{G} prédéfinie qui représente une valeur de seuil,
b) dans le cas où la vitesse de rotation n_{E} passe au-dessous de la vitesse de rotation limite n_{G}, le déclenchement d'une instruction de commande en vue d'actionner un système actionneur servant à activer le système de blocage de stationnement (20) est effectué,
c) dans le cas où la vitesse de rotation n_{E} dépasse la vitesse de rotation limite n_{G}, le déclenchement d'une instruction de commande en vue d'actionner un système actionneur servant à activer le système de blocage de stationnement (20) est retardé d'un intervalle de temps Δt, en ce qu'après l'écoulement de l'intervalle de temps Δt,
d) une deuxième boucle de comparaison (44) est parcourue tant que nE > n_{G} et lorsque la relation n_{E} ≤ n_{G} est atteinte, bifurcation vers l'étape de procédé b).

2. Procédé selon la revendication 1, **caractérisé en ce que** la vitesse de rotation n_{E} de l'au moins une machine électrique (24) ayant une boîte de vitesses est en relation fixe avec la vitesse v_{F} du véhicule (10).

3. Procédé selon la revendication 1, **caractérisé en ce que** la détermination de la vitesse de rotation n_{E} de l'au moins une machine électrique (24) ayant une boîte de vitesses s'effectue dans une unité d'interprétation (22) à l'aide de la vitesse v_{F} du véhicule ou de la vitesse de rotation de la boîte de vitesses.

4. Procédé selon l'une des revendications précédentes, **caractérisé en ce que** la durée de l'intervalle de temps Δt est dépendante de l'amplitude du dépassement de la vitesse de rotation limite n_{G} par la vitesse de rotation n_{E} déterminée de l'au moins une machine électrique (24).

5. Procédé selon la revendication 1, **caractérisé en ce que** le déclenchement d'une instruction de commande en vue d'actionner le système actionneur servant à activer le système de blocage de stationnement (20) est effectué de telle sorte qu'un essieu avant (12), un essieu arrière (14) ou une chaîne cinématique (18) est bloqué(e).

6. Système de blocage de stationnement (20) pour un véhicule (10) comprenant au moins une machine électrique (24) ayant une boîte de vitesses, qui est reliée aux roues (16) du véhicule (10), le système de blocage de stationnement (20) fonctionnant conformément au procédé selon une ou plusieurs des revendications précédentes, **caractérisé en ce que** le système de blocage de stationnement (20) comprend un dispositif de blocage commutable à action par complémentarité de formes.

7. Système de blocage de stationnement (20) selon la revendication 6, **caractérisé en ce que** celui-ci est associé à l'essieu avant (12), à l'essieu arrière (14) ou à la chaîne cinématique (18) du véhicule (10).

8. Système de blocage de stationnement (20) selon la revendication 6, **caractérisé en ce que** celui-ci comporte un mécanisme de refus mécanique qui empêche un enclenchement du blocage commutable à action par complémentarité de formes lorsque la vitesse de déplacement v_{F} est plus élevée.
